# EUROPEAN PATENT APPLICATION

(11) **EP 3 581 330 A1**
(43) Date of publication of application: **18.12.2019**
(21) Application number: 19178748.0
(22) Date of filing: 06.06.2019
(51) Int. Cl.: B23Q 39/04, B23Q 7/02

(54) **STIFFENING ELEMENT FOR WORKSTATIONS WITH A TURNTABLE**

(30) Priority: 12.06.2018 IT 201800006220
(71) Applicant: Bucci Automations S.p.A., 48018 Faenza (RA) (IT)
(72) Inventor: CUSUMANO, Dario, 48018 FAENZA RA (IT); VINCENZI, Nicolò, 48018 FAENZA RA (IT)
(74) Representative: Modiano, Micaela Nadia

(57) **Abstract**

A stiffening element (1) for workstations (2) with a turntable (3) which comprise at least one fixed-base machining station (4) which is provided with at least one respective tool and a turntable (3) which is provided with at least one radial arm (5) for supporting at least one respective clamping assembly (6) for at least one workpiece to be machined; the element (1) comprises at least one fixed frame (7), which is arranged radially and aligned with a corresponding machining station (4), for supporting, at its terminal end (8) that lies below the trajectory of the at least one respective clamping assembly (6), temporary restraining means (9) for corresponding temporary restraining elements (10) which are complementary thereto and are integral with at least one respective clamping element (6).

## Description

The present invention relates to a stiffening element for workstations with a turntable.

A workstation is a machine for working metal, generally of the CNC type (computer numerical control), which is adapted to execute desired machining operations on specific workpieces. Generally workstations carry out machining with removal of shavings, such as for example perforation, milling and the like.

The use is known of this type of device for machining operations which involve several consecutive steps: in fact a workstation can have a preset number of stations and the workpiece to be machined, by passing from one station to the subsequent stations, will undergo a series of mechanical machining operations that corresponds to the sequence of intended operational steps.

The use is frequent of deployments of machining stations along a circular trajectory, for the purpose of enabling the workpiece to undergo all the necessary operations while it is moved along a circular trajectory.

In this manner it is sufficient to arrange the clamping assemblies intended to support the workpieces to be machined on a rotating carousel, so that they can be progressively aligned with the machining stations.

This type of workstation, although particularly efficient and offering reduced space occupation (with respect to an embodiment in which the workpieces to be machined move along a linear trajectory), implies the provision of fixed machining stations that are outside the carousel (thus complicating the installation and adjustment of the workstation) or the use of cantilevered clamping assemblies (mounted on long supporting arms).

Therefore there is a high level of complexity of installation and, furthermore, it is very difficult to ensure that the alignments of the clamping assemblies with the machining stations are correct and stable (i.e. that they do not undergo any modification during execution of the machining on the workpiece).

The aim of the present invention is to solve the above mentioned drawbacks, by providing a stiffening element for workstations with a turntable which ensures a high stability of the workpiece, supported by the corresponding clamping assembly, during the mechanical machining operations.

Within this aim, an object of the invention is to provide a stiffening element for workstations with a turntable which has a simple structure that is easily installed.

Another object of the invention is to provide a stiffening element for workstations with a turntable which does not interfere with other components of the workstation, while allowing easy access to each part thereof.

Another object of the present invention is to provide a stiffening element for workstations with a turntable which is of low cost, easily and practically implemented and safe in use.

This aim and these and other objects that will become better apparent hereinafter are achieved by a stiffening element for workstations with a turntable which comprise at least one fixed-base machining station which is provided with at least one respective tool and a turntable which is provided with at least one radial arm for supporting at least one respective clamping assembly for at least one workpiece to be machined, characterized in that it comprises at least one fixed frame, which is arranged radially and aligned with a corresponding machining station, for supporting, at its terminal end that lies below the trajectory of the at least one respective clamping assembly, temporary restraining means for corresponding temporary restraining elements which are complementary thereto and are integral with at least one respective clamping element.

Further characteristics and advantages of the invention will become better apparent from the detailed description that follows of a preferred, but not exclusive, embodiment of the stiffening element for workstations with a turntable according to the invention, which is illustrated by way of nonlimiting example in the accompanying drawings, wherein:

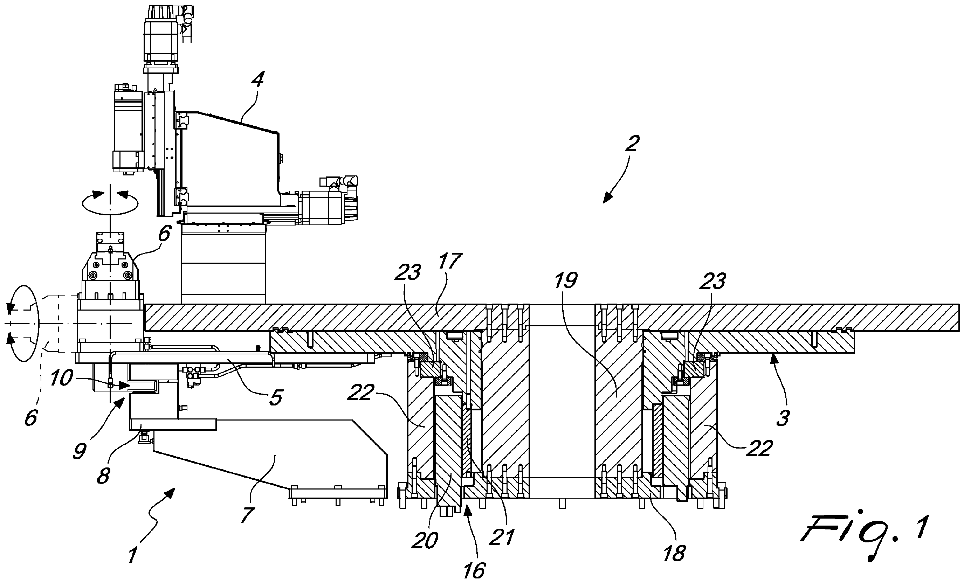

Figure 1 is a cross-sectional side view taken along a transverse plane of a workstation with a turntable, which is provided with a stiffening element according to the invention;

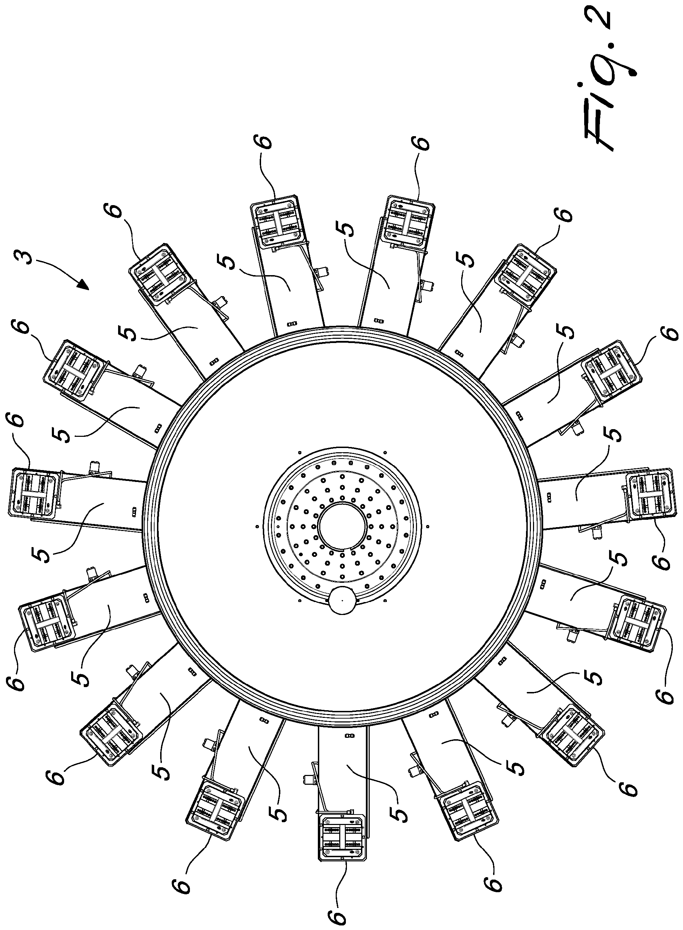

Figure 2 is a view from above of the turntable of the workstation in Figure 1;

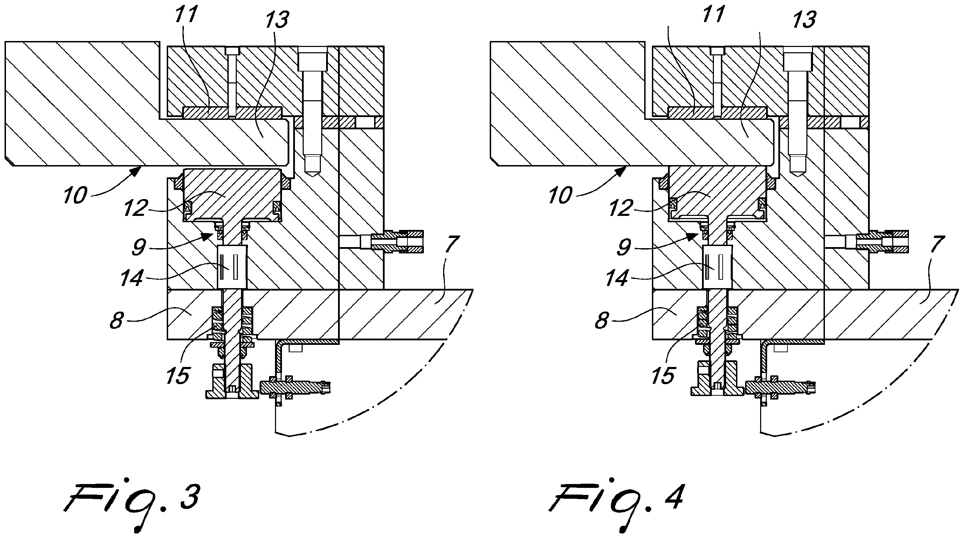

Figure 3 is an enlarged side view of a portion of the stiffening element according to the invention in the open configuration;
Figure 4 is an enlarged side view of a portion of the stiffening element according to the invention in the clamped configuration.

With particular reference to the figures, the reference numeral 1 generally designates a stiffening element for workstations 2 with a turntable 3.

It should be noted first of all that the term "workpiece" to be subjected to mechanical machining operations, in the present discussion, means any component, blank or complex apparatus that needs to be subjected to treatments by means of machining stations (for example perforation, milling, generic removal of shavings and/or the like).

Workstations 2 with a turntable 3 which are adapted to be fitted with the stiffening element 1 according to the invention comprise at least one fixed-base machining station 4 which is provided with at least one respective tool and the turntable 3 which is provided with at least one radial arm 5 for supporting at least one respective clamping assembly 6 for at least one workpiece to be machined.

The stiffening element 1 comprises at least one fixed frame 7, which is arranged radially and aligned with a corresponding machining station 4, for supporting, at its terminal end 8 that lies below the trajectory of the at least one respective clamping assembly 6, temporary restraining means 9 for corresponding temporary restraining elements 10 which are complementary thereto and are integral with at least one respective clamping element 6.

According to a particular embodiment of undoubted practical and applicative interest, the restraining means 9 comprise a clamp which has a fixed jaw 11 and a movable jaw 12 which can move by virtue of the action of a respective actuator; the movable jaw 12 can translate according to a preset stroke along the direction of approach/distancing with respect to the fixed jaw 11.

It should be noted that a seat is defined between the fixed jaw 11 and the movable jaw 12 and has a shape and dimensions which are substantially complementary with respect to the restraining elements 10, which are constituted, in a preferred embodiment thereof, by a plate 13 which is adapted to be accommodated temporarily in the seat.

The actuator can conveniently comprise a fluid-operated piston 14 for clamping the movable jaw 12 on the plate 13, as a consequence of an advancement thereof toward the fixed jaw 11, and a reset spring 15 for elastically forcing the return of the movable jaw 12 to the maximum distance from the fixed jaw 11 under conditions of absence of power to the piston 14.

It should be noted that a particularly efficient embodiment of the stiffening element 1 according to the invention adopts a hydraulic piston 14.

It should be noted that the frames 7 and the temporary restraining means 9 that are coupled thereto, can advantageously be a plurality; each frame 7 will be aligned with a respective machining station 4 for locking a corresponding clamping assembly 6 during the execution of the mechanical machining processes by the corresponding machining station 4.

With particular reference to the embodiment shown in the accompanying figures, the turntable 3 can positively be actuated by way of motor drive unit which is selected preferably from a torque motor, a motor assembly with pinion-crown gear coupling, a motor assembly with belt-chain-pulley coupling and the like.

The machining stations 4 will be integral, in such case, with a fixed surface 17 which is coupled to the footing 18 of the workstation 2 by way of a central post 19, which is accommodated inside the axial cavity that is inside the torque motor 16.

The torque motor 16 will be constituted by a stator ring 20 (integral with the footing 18 and therefore fixed) and by a rotor ring 21 (which can rotate and is integral with the turntable 3).

Outside the torque motor 16 there will be a supporting band 22 for the turntable 3.

The band 22 will have a circular shape and will comprise respective bearings 23 on its upper edge which faces and is proximate to the lower face of the turntable 3. Preferably such bearings 23 will be crossed roller bearings for the purpose of ensuring the support of the turntable 3 and also to secure its correct alignment (such crossed roller bearings exert an axial action and a radial action simultaneously).

Finally it should be noted that the footing 18 is designed to support at least one component selected from the post 19, the supporting band 22, and the stator ring 20 of the torque motor 16. Such footing 18 can further comprise stable coupling areas for the at least one fixed frame 7.

In one of its possible embodiments, operation of the stiffening element according to the invention can be as follows: when the turntable 3, by rotating, reaches a configuration of alignment of a clamping assembly 6 with a respective machining station 4, the restraining means 9 are pressed rigidly against the restraining elements 10 (the movable jaw 12, actuated by the piston 14, clamps the plate 13 against the fixed jaw 11) thus stably locking the clamping assembly 6 and, with it, also the workpiece held by it which needs to be subjected to the mechanical machining operations.

The locking will be maintained for all the time necessary to carry out the desired mechanical machining operations.

Then the supply of power to the piston 14 is cut and the movable jaw 12 will retreat, by virtue of the action of the reset spring 15, until the plate 13 is freed completely, thus allowing the rotation of the turntable 3. It will then be possible to proceed with an additional rotation of the turntable 3 in order to bring the clamping assembly 6 into a configuration of alignment with another machining station 4.

With particular reference to an embodiment of undoubted practical and applicative interest, it should be noted that the clamping assembly 6, for the at least one workpiece to be machined, can conveniently comprise means for articulating its portion for restraining the workpiece to be machined. Such restraining portion will therefore be provided with at least one degree of freedom which is preferably selected between the rotation about a vertical and/or horizontal axis and the translation according to a predefined stroke.

Advantageously the present invention solves the above mentioned problems, by providing a stiffening element 1 for workstations 2 with a turntable 3 which ensures a high stability of the workpiece, supported by it, during the mechanical machining operations.

Advantageously the stiffening element 1 according to the invention has a simple structure and is easily installed.

Conveniently the stiffening element 1 according to the invention does not interfere with other components of the workstation 1, while allowing easy access to each part thereof.

Positively the stiffening element 1 according to the invention is easily and practically implemented and is of low cost: such characteristics make the element 1 according to the invention an innovation that is safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102018000006220 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stiffening element for workstations (2) with a turntable (3) which comprise at least one fixed machining station (4) which is provided with at least one respective tool and a turntable (3) which is provided with at least one radial arm (5) for supporting at least one respective clamping assembly (6) for at least one workpiece to be machined, **characterized in that** it comprises at least one fixed frame (7), which is arranged radially and aligned with a corresponding machining station (4), for supporting, at its terminal end (8) that lies below the trajectory of the at least one respective clamping assembly (6), temporary restraining means (9) for corresponding temporary restraining elements (10) which are complementary thereto and are integral with at least one respective clamping element (6).

2. The stiffening element according to claim 1, **characterized in that** said restraining means (9) comprise a clamp which has a fixed jaw (11) and a movable jaw (12) which can move, by virtue of the action of a respective actuator, along the direction of approach/distancing with respect to said fixed jaw (11).

3. The stiffening element according to claim 2, **characterized in that** a seat is defined between said fixed jaw (11) and said movable jaw (12) and has a shape and dimensions which are substantially complementary with respect to said restraining elements (10), which are constituted by a plate (13) that is adapted to be accommodated temporarily in said seat.

4. The stiffening element according to claim 2, **characterized in that** said actuator comprises a fluid-operated piston (14) for clamping said movable jaw (12), as a consequence of an advancement thereof toward said fixed jaw (11), and a reset spring (15) for the return of said movable jaw (12) to the maximum distance from said fixed jaw (11) under conditions of absence of power to said piston (14).

5. The stiffening element according to one or more of the preceding claims, **characterized in that** said frames (7) and said temporary restraining means (9) are a plurality, each frame (7) being aligned with a respective machining station (14) for locking a corresponding clamping assembly (6) during the execution of the mechanical machining processes by the corresponding machining station (4).

6. The stiffening element according to one or more of the preceding claims, **characterized in that** said turntable (3) is actuated by way of a motor drive unit which is selected preferably from a torque motor (16), a motor assembly with pinion-crown gear coupling, a motor assembly with belt-chain-pulley coupling and the like, said machining stations (4) being integral with a fixed surface (17) which is coupled to a footing (18) of the workstation (2) by way of a central post (19), which is accommodated in an axial cavity that is inside said turntable (3).

7. The stiffening element according to claim 6, **characterized in that** outside said turntable (3) there is a supporting band (22) for said turntable (3), said band (22) having a circular shape and comprising respective bearings (23) on its upper edge which faces and is proximate to the lower face of said turntable (3).

8. The stiffening element according to one or more of the preceding claims, **characterized in that** said clamping assemblies (6) for at least one workpiece to be machined comprise means for articulating a portion thereof for restraining the workpiece to be machined, said portion for restraining having at least one degree of freedom which is preferably chosen from rotation about a vertical and/or horizontal axis and translation according to a predefined stroke.
